# EUROPEAN PATENT SPECIFICATION

(11) **EP 2 719 289 B1**
(45) Date of publication and mention of the grant of the patent: **20.01.2016**
(21) Application number: 12464022.8
(22) Date of filing: 20.11.2012
(51) Int. Cl.: A23L 1/304, A23L 1/305, A23J 3/34, A23K 1/16, A23K 1/175

(54) **PROCESS FOR OBTAINMENT OF AMINO ACIDS CHELATES WITH MICRO-ELEMENTS**
VERFAHREN ZUM ERHALT VON AMINOSÄURECHELATEN MIT MIKROELEMENTEN
PROCÉDÉ POUR L'OBTENTION DE CHÉLATES D'ACIDE AMINÉS COMPRENANT DES MICRO-ÉLÉMENTS

(43) Date of publication of application: 16.04.2014
(73) Proprietor: SC Medisan 2010 SRL, 27681630 Medias, jud. Sibiu (RO)
(72) Inventor: Velea, Sanda, Bucharest (RO); Oancea, Florin, Bucharest (RO); Blajan, Olimpiu, Medias Jud Sibiu (RO)
(74) Representative: Teodorescu, Mihaela

(56) References cited:
- EP-A1- 2 489 670
- CN-A- 1 312 238
- US-B1- 6 994 876

## Description

The present invention relates to a process for obtainment of amino acid chelates with essential micro-elements, which are intended to be used as feed or food additive, dietary supplement for humans or fertilizers with micro-nutrients for plants.

There are known several processes which are intended to produce chelate complexes of various essential micro-elements with alpha-amino acids. These complexes are obtained by chelation of essential micro-elements ions using as ligands pure amino acids or protein hydrolysate, which contain mixtures of amino acids and peptides. Such products are referred commercially as "metal amino acid chelates", when pure amino acids are used as ligands, and as "metal proteinate" or "peptide chelates of metals", when protein hydrolysate are used as ligands, thus some of the essential elements involved into these complexes, like selenium or boron, are metalloids and not metal. The American Association of Feed Control Officials (AAFCO) has defined a "metal proteinate" as the product resulting from the chelation of a micro-element salt with amino acids and/or partially hydrolyzed protein. These metal proteinates should also include at least one chelate ring, which implies the existence of polydentates ligands, on which the donors groups are arranged in a manner which allow the formation of concomitant bonds with the same ion of metal / essential micro-element.

On EU official document (e.g. Commission Regulation (EC) No 1334/2003 of 25 July 2003 amending the conditions for authorization of a number of additives in feedingstuffs belonging to the group of trace elements) the product obtained by complexation of trace elements with protein hydrolysate is referred as "chelate of amino acid". European regulation assigned a formula for this complex of trace elements with amino acids, Me(X)₁₋₃ nH₂O, where X is the anion of any amino acid derived from hydrolyzed protein. The maximum molecular weight of such "chelate of amino acids" is 1800 dal, being at the limit of absorption through the intestinal barrier (Daniel, H., 2004, Ann Rev. Physiol., 66:361-384). Thus, according to EU regulation in force, proteinates, which can be formed using tetrapeptides / polypeptides, are not allowed as feed additives, being considered probably as having a molecular weight that is too great for direct assimilation of the amino acid chelate from the intestine.

Using protein hydrolysates provide an economic advantage over using pure amino acids as ligands. US Patent 6,323,354 disclose a process to prepare amino acid metal chelates with metal ions from lipoproteins and metal salts. Amino acids are obtained by hydrolysis of lipoproteins obtained from, e.g., fractured microbe cell walls (generated in the biological synthesis of amino acids). The lipoproteins are hydrolyzed with a strong base, such as sodium hydroxide, and the resulting hydrolysate is reacted with a metal compound, such as zinc sulfate, to obtain the amino acid metal chelates. US Patent 6,541,051 present a process to produce metal amino acid complexes, in which amino acids are obtained by hydrolyzing soy protein. The protein is hydrolyzed with a strong mineral acid (exemplified by hydrochloric acid), and the produced hydrolysate is reacted with a metal compound, (exemplified with zinc oxide), to obtain the amino acid chelates..

Hydrolysis using strong mineral acids or bases has several disadvantages. Handling strong mineral acids or bases require special equipment and safety precautions. In addition, the dissociated salts resulted from neutralization of strong mineral acids (e.g., sulfate or chloride), or of strong bases (e.g. sodium or potassium), are remaining in the protein hydrolysate and dilute the amino acid metal chelate that is sought to be obtained. Longer period and higher temperature are required for the hydrolysis of peptide bond involving amino acid with hydrophobic side chains, like valine, leucine and isoleucine. Acid hydrolysis destroy tryptophan and determine losses of serine and threonine (Aitken, A., Learmonth, M., 2002, The Protein Protocols Handbook, Part I, Springer Verlag, Berlin, pg. 41-44.). Alkaline hydrolysis destroy significant amount of arginine, glutamine and serine. Cross-linking of generated peptides following beta-elimination reaction at serine, cysteine and threonine residues occurs along with racemization from the original L-configuration into a mixture of DL amino acids (Kaye, G.I., Weber, P.B., Evans, A., Venezia, R.A., 1998, Contemp. Topics, 37: 43-46). The formation of such by-products limits the bioavailability of micro-elements included in such chelates. The relative bioavailability of manganese included into manganese chelate resulted from process disclosed in US Patent 6,323,354 was found to be approximately 15% lower than that of reagent-grade manganese sulfate for chicks, when all data were included in the regression model (Miles, R.D., Henry, P.R., Sampath, V.C., Shivazad, M. and Comer, C.W. 2003.. J. Appl. Poult. Res., 12: 417-423.).

Enzymatic hydrolysis seems to be more suitable for the production of amino acids chelates (resulted from proteins hydrolysis). The protein hydrolysis by enzymes is almost a duplication of that which occurs naturally in the gastrointestinal tract. The high temperatures required under extreme acid or base conditions maintained for long periods of time, till 24 hours, are not employed in the enzyme process of hydrolyzing protein. This avoids the destruction of amino acids and formation of non-desirable byproducts. Because the enzyme hydrolysis process takes place under neutral or near neutral pH conditions, there is no need for a neutralization step, avoiding the formation of salts which are diluting amino acid chelates.

On the state of the art several enzymatic hydrolysis process for preparing essential trace elements chelates were proposed. US Patent 3,969,540 describes a process designed to obtain a metal proteinates from protein hydrolysates and metal salts. Protein hydrolysates are obtained from various proteinaceous material (casein, liver powder, raw gland tissue, autolyzed yeast, soy protein, gelatin), hydrolyzed by proteases of bacterial of vegetal origin. US Patent 4,172,072 presents a process for producing of a buffered enzymatically metal proteinate, where collagen is hydrolyzed by the use of protease of vegetable origin.

Plant and animal derived proteins have complex tertiary and quaternary structures, which are more resistant to enzymatic hydrolysis. This resistance to enzymatic hydrolysis is even higher when proteins are included into complex structures like animal tissues, deffated seed meals or yeast biomass recovered from industrial processes. It is a need for an improved process for dissolution of proteins from proteinaceous raw materials and expression of peptide bonds susceptible to proteases cleavage.

Some of the proteinaceous raw materials (like spent brewery yeast or rapeseed meal) have a specific bitterness which could pass to the resulted amino acids chelates and reduce their palatability.

In the case of proteinaceous complex material (like live powder, raw gland tissue, autolyzed yeast, bacterial biomass) there are present others compounds (e.g. nucleic acids or oligosaccharides) which are interfering with the formation of amino acid chelates. Enzymatic hydrolyzed protein contains a large proportion of oligopeptides, which also are interfering with the formation of amino acid chelates. Di-peptides or even tri-peptides are acceptable as carrier for essential trace elements, preserving the advantage of increased bioavailability. Alfa-amino acid chelates and di/tri-peptide chelates are readily absorbed in the absorptive mucosal cells of an animal or plant leaves tissues by means of active transport or other know mechanisms. The micro-elements are absorbed together with the amino acids and/or di/tripeptide as a single unit utilizing the amino acids / peptide as carrier molecules. Therefore, the problems associated with the competition of ions for active sites and the suppression of specific nutritive mineral elements by others, are avoided. This is especially true for compounds such as iron sulfates that must be delivered in relatively large quantities in order to allow the animal body or plant to absorb an appropriate amount. This is significant because large quantities often cause negative phenomena, like nausea and other gastrointestinal discomforts in animals, or phytotoxicity phenomena on plants.

Chelates with oligopeptides larger than 3 amino acids residues have a lower bioavailability; for that reason the EU regulation in force exclude such compounds from being put into the market. It is a need for a process which should assure the predominant formation of chelates having maximum 3 amino acids residues. US Patent 8,071,331 teaches about a process of producing amino acid chelates on which are claimed only the implication of free amino acids and di/tripeptides. Bacterial biomass (cell cream obtained as by-product of lysine production) is hydrolyzed with a complex mixture of hydrolases which have also protease activity (pancreatin), under optimal conditions, to produce mainly free amino acids and di/tri-peptides.

The resulted hydrolysate is used for the complexation of a metal soluble salt, like zinc sulfate. The process described by US Patent 8,071,331 does not provide information regarding the avoidance of interference from the others compounds present into bacterial biomass used as raw material (which are also liberated from the initial substrate due to the amylase and lipase existing into pancreatin preparation used in this process). Bacterial biomass contains 20% dry matter and 16% crude protein; the rest of 4% dry matter is constitute probably mainly of nucleic acids, lipids and cell walls oligosaccharides, which could generate compounds competing for the complexation of trace elements ions.

Use of water soluble salts in making amino acid chelates generate also the problem of additional counter ions, soluble in water (sulfate, chloride, sodium, potassium etc.). US Patent 2,877,253 disclose a product formed by the reaction of one mole of glycine with one mole of ferrous sulfate. The patent indicates that the sulfate anion becomes tied up in the reaction which seems to forms a ferrous sulfate-glycine complex. Whether the sulfate actually participates in the reaction or is merely present as the salt of an alkali metal, it nevertheless is present in the reaction mixture. Thus, in many cases, the sulfate interferes with the total reaction and absorption of the chelate. Such complex products, with contra-ion associated with the amino acid chelate are difficult to purify. While sodium sulfate, per se, is water soluble, the reaction between a metal sulfate and an amino acid is never carried to 100% completion and the sulfate ion is always present. The same issues are presents in the case of chloride ions when utilizing a metal chloride salt for amino acid chelate preparation.

When protein hydrolysate are used for the production of amino acid chelates di/tri-peptides are competing for the chelation of trace elements, bonding only one atom per molecules and generating an excess on unbound trace element ions. This incomplete filling of all coordination binding sites of the metal ion and the charge associated with the ligand following the chelation of the ligand(s) to the metal ion generate a metallic flavor or aftertaste that some people and animals find unpleasant or disagreeable (as was shown in the US Patent 5,516,925). In the above mentioned patent, US 5,516,925 (published also as WO9606101 (A1) NZ292002 (A) JPH10504822 (A) EP0777672 (A1) CA2198258 (A1) BR9508746 (A) AU3368195 (A) AU689312 (B2)), the use of pure amino acids in combination with organic acids (dicarborboxylic, hydroxycarboxylic, hydroxydicarboxylic or hydroxytricarboxylic) maintain the chelate molecule as an optimum pH for purpose of stability and palatability, but this technical solution is not useful for protein hydrolysate source, where is difficult to establish the exact ratio between the free amino acids and the di/tripepetides, necessary for the stoichiometric calculation related to this type of buffering.

Use of insoluble compounds / compounds with low solubility of micro-elements, like oxides or carbonates, could avoid both issues of excess micro-elements and of additional counter ions. The chelate reaction displaces the equilibrium of the solubility product, but formation of amino acid chelates from insoluble compounds of trace metals require large quantity of water and long period of time, as was disclosed by US Patent 4,830,716. The long reaction time and the need for spray drying or drum drying a product with large quantity of water is at the limit of economic feasibility.

Consequently, it is a need to develop a process assuring a better rate of formation of amino acids chelates of essential micro-elements from compounds with water low solubility, like oxides, carbonates or salt of alkaline earth metals.

The present invention intent to provide a process for producing chelates of amino acids with the micro-elements, wherein are exposed the peptidic bonds which are intended to be hydrolyzed and wherein the free amino acids, and/or short, di/tri peptides ligands, are obtained from largely accessible proteinaceous raw materials, on which palatability was improved, by reducing the level of compounds responsible for bitterness and by formation of compounds which are improving the taste. It is a further object of the present invention to provide a process of producing amino acid metal chelates, wherein chelates with high essential trace element concentration, and low concentrations of excess ions, are economically produced using insoluble compounds as a source of essential micro-elements ions.

The process according to the invention involves the following steps:
✔ Washing of the proteinaceous material with a solution of 5% Na₂CO₃, for removal of a large parts of compounds responsible for bitterness and for partial destruction of quaternary and tertiary structure of proteins;
✔ Dispersion of the proteinaceous material on water, followed by addition of a microbial lipase and continuation of the reaction in highly dispersed media resulted from ultrasonication of the mixture, to assure the formation of the compounds which increase the palatability of products and for a better exposure of peptidic bonds which follow to be hydrolyzed;
✔ Hydrolysis of proteinaceous material with a mixture of microbial proteases, endo-proteases and aminopeptidase, at a neutral pH and a temperature of 55...60°C, the enzymatic hydrolysis process being carried out for 16...20 hours, till a high yield on free amino acids and di/tri- peptides is achieved;
✔ Ultrafiltration of the resulting hydrolysate through one or more membranes that filter out particles having a molecular weight greater than 3 kDa;
✔ Concentration by evaporation of the permeate till 15% dry matter;
✔ Addition of an insoluble salt of essential micro-element;
✔ Ultrasonication with 400 W of the mixture enzyme hydrolysate - insoluble micro element compound for 30 min at 45°C;
✔ Centrifugation of the excess insoluble compound of micro-element and spray-drying at 140..145°C entrance temperature and 80...85°C exit temperature.

According, in a first preferred embodiment invention refer to a process to prepare of amino acids chelates with essential micro-elements which include the following steps:
- Washing of the proteinaceous material with a solution of 5% Na₂CO₃, followed by ultrasonication of the mixture with 400 W for 20 min at 40°C, and treatment with microbial lipase on a ratio of 15...25 LU per 1 g of proteinaceous material;
- Hydrolysis of proteinaceous material with a mixture of microbial proteases, endo-proteases and aminopeptidase, at a neutral pH and a temperature of 55...60°C, for 16...20 hours, followed by centrifugation at 5000xg for removal of not-solubilized material and followed by ultrafiltration of hydrolysate for removal of particles with a molecular mass higher than 3 kDa;
- Concentration by evaporation of the permeate till 15% dry matter;
- Addition of an insoluble compound / low soluble compound of essential micro-element on a ratio 1 mole of insoluble / low soluble compound of Mn, Zn, Fe, B to 2 moles of total amino acids, theoretical resulted by total hydrolysis of proteinaceous material, 15 mM insoluble compound of molybdenum to 1 mole of amino acids, 1,75 mM insoluble selenium compound to 1 mole of amino acids, 5 mM insoluble chromium compound to 2 moles of amino acids, and ultrasonication with 400 W of the mixture enzyme hydrolysate - insoluble micro element compound for 30 min at 45°C
- Centrifugation of the excess insoluble compound of micro-element and spray-drying at 140..145°C entrance temperature and 80...85°C exit temperature,

In another preferred aspect the lipase enzyme is selected as the lipase from *Rhizomucor miehei* expressed in *Aspergillus oryzae.*

In another aspect of the invention in the above defined process the proteinaceous raw material is selected from spent brewery yeast, rapeseed meal, soya meal, whey protein concentrate.

In another aspect of the invention in the above defined process the insoluble compound of the essential micro-element is selected from manganese (II) carbonate, chromium (III) carbonate, magnesium selenite hexahidrate, dicalcium hexaborate hexahidrate, molybdenum oxide, zinc carbonate basic, iron (III) oxide.

The process according to the invention has the following advantages:
- Remove a large part of the compounds responsible for the bitter taste and assure the formation of a new aroma compounds, for an increased palatability of the final products intended to be used as feed or food additives;
- Determine a high yield of enzymatic hydrolysis also on proteinaceous materials more resistant to enzymatic hydrolysis, like de-oiled seed meals;
- Assure a predominant formation of chelates of free amino acids and di/tri - peptides;
- Limit the concentration of in excess ions, reducing the metallic after-taste and improving the palatability;
- Add a higher value to food industry by-products like spent brewery yeast, de-oiled seed meals, whey resulted from the fabrication of cheeses;
- Allow separation of others constituents from the proteinaceous raw materials (like nucleic acids or cell-wall glucans) which could be further used for add-value products like taste enhancers (ribonucleotides from yeast nucleic acid) or food emulsifiers (glucans from the cell walls);
- Limit the redox reactions on which are involved some essential micro-element with multiple oxidation states, reducing the risk of formation of the chemical species with high toxicity, e.g. Cr⁺⁶;
- Could be adapted for the production of different forms of amino acid chelates of essential micro-elements, which could be used as foliar fertilizers, feed of food additives or dietary supplements.

The invention will now be describes in connection with the preferred embodiments in the following examples.

*Example 1*. The spent brewery yeast is harvest by centrifugation. It is washed with a solution of 5% Na₂CO₃, in a ratio of 1 volume solution of 5% Na₂CO₃ with 2 volume of yeast suspension, for remove of the bitter compounds. The yeast from washing solution is recovered by centrifugation, 5000xg for 10 min. On the resulted sediment the dry matter is determined after drying at 105°C for 4 hours and weighing on an electronic scale. A volume of 95 ml of sediment, corresponding to 25 g of yeast (dry matter) is added to a 1000 ml 3-neck flat bottom flask, equipped with a reflux condenser, addition funnel and thermoresistance for temperature monitoring. The volume is completed with water till 250 ml and the pH is corrected to 7 with 20% H₃PO₄ solution. Microbial lipase, Palatase® (Novozyme, enzyme from *Rhizomucor miehei* expressed on *Aspergillus oryzae*) with an activity of 20,000 LU/g is added, on a quantity of 20 LU units per g of proteic material, respectively 50 mg. One lipase unit LU is defined as being the amount of enzyme which, on standard conditions (at 30,0°C, pH 7,0), with gum arabic as emulsifier and tributyrin as substrate, liberate 1 mmol of titratable butyric acid per min.

The liquid is stirred vigorously with a magnetic stirrer and heated till 35°C. The addition funnel is taken out and instead of it is introduced an ultrasound probe. The yeast suspension with enzyme is sonicated for 20 min at 400 W at 40°C. After the end of sonication cycle the yeast suspension the probe is removed and the funnel is reintroduced and the yeast suspension is heated to 60°C. Are added 0.025 g Alcalase AF 2.4 L (Novozyme, bacterial endopeptidase from *Bacillus licheniformis,* with subtilisin / serine endopeptidase as a major enzymatic component, having the specific activity of 2.4 Anson Units (AU) per gram; one Anson Unit is the amount of enzyme that, under standard conditions, digests haemoglobin at an initial rate that produces an amount of trichloroacetic acid-soluble product which gives the same color with the Folin-Ciocâlteu reagent as one milliequivalent of tyrosine) and 0.025 g of Flavourzyme 500 MG (Novozyme, an aminopeptidase / exopeptidase and endoprotease complex obtained from *Aspergillus oryzae,* with an activity of 500 LAPU/g; one LAPU, leucine aminopeptidase unit, is the amount of enzyme that hydrolyses 1 µmol of leucine-p-nitroanilide per minute. Any type of combination of microbial proteases and aminopeptidases could be used, with the condition to assure a similar hydrolytic activity on the mixture. The mixture yeast suspension - enzymes is maintained for 16 hours at 60°C and then is centrifuged at 5000xg for removal of the eventual cell debris and the supernatant is ultrafiltered through a 3 kDa membrane using a Millipore Pelicon XL Biomax 5, 50 cm² with a Labscale TFF System.

On 1 ml of permeate are added 3 ml of 5% aqueous trichloroacetic acid (TCA) solution. It is not resulting a precipitate, and this prove that on permeate are present only free amino acids and di/tri-peptides. The permeate is concentrated by evaporation, under vacuum, till 15% dry matter (estimated by refractometry). Approx. 75 ml of enzyme hydrolysate concentrate is introduced into a 500 ml 3-neck flat bottom flask equipped with a reflux condenser, addition funnel and thermoresistance for temperature monitoring, on which was previously quantitatively transferred a quantity of 4,2255 g of manganese (II) carbonate. The addition of the insoluble salt of micro-element is in a stoichiometric ratio of 2 moles amino acids to 1 mole of insoluble compound, according to the reaction:

XCO₃ + 2H(AA)→ X(AA)₂ + CO₂ + H₂O

considering an average molecular mass of yeast amino acids of 136Da.

The suspension is stirred vigorously with a magnetic stirrer and heated till 45°C. The funnel is taken out and is introduced an ultrasound probe. The hydrolysate and manganese(II) carbonate suspension is sonicated for 30 min at 400 W. After ultrasonication, the excess of insoluble compound of micro-element is separated by centrifugation, and the supernatant containing amino acid chelates is spray-dried at 140...150°C entrance temperature and 80...85°C exit temperature.

It is obtained a product containing min. 15% manganese, the whole quantity of manganese being chelated on amino acids and di/tri-peptides. The resulted product is useful as feed additive or dietary supplement.

*Example 2.* Proceed like in example 1, with the difference that are used 70 mg of chromium (III) carbonate, the Cr³⁺ ion complexing especially with the free amino acids glycine, glutamic acid and cysteine. The chromium (III) carbonate is prepared by precipitation from a solution of chromium (III) chloride, with an excess of 50% solution of sodium carbonate. Over 500 ml solution 15% Na₂CO₃ are slowly added 166 g of CrCl₃ solution 30%, under continuous and strong agitation (minimum 200 rpm), maintaining the temperature between 20 and 25°C. The formed precipitate is filtered and washed with bidistilled water, till the water conductivity is below 2 mS/cm, and dried on vacuum oven at 45°C for 72 hours. From the prepared insoluble compound are weighted with precision the needed 70 mg, which are transferred quantitatively to the 3-neck flat bottom flask, continuing like in example 1. Due to the use of an insoluble compound, the risk of the generation of toxic species like Cr⁶⁺ from excess Cr³⁺ ions, is low.

It is obtained a product containing min. 0.1% chromium, the whole quantity of chromium being chelated on amino acids. The resulted product is useful as feed additive or dietary supplement.

*Example 3.* Proceed like in example 1, with the difference that 35 mg of magnesium selenite hexahidrate are used, the selenite ion reacting especially with the amino acids / peptides having thiol groups, like cysteine or glutathione. The cubic crystal of MgSeO3.6H2O, insoluble in water, are prepared by the addition, slowly and gradually, under agitation, of 44 ml of selenious acid, H₂SeO₃, purity 98%, density 3,004 g/ml, and of 204 ml solution 10% MgCl₂.6H₂O over 95 ml solution 10% Na₂CO₃. The resulted precipitate is filtered, washed on filter with washed with bidistilled water, till the water conductivity is below 2 mS/cm, and dried on vacuum oven at 45°C for 72 hours. From the prepared insoluble compound are weighted with precision the needed 35 mg, which are transferred quantitatively to the 3-neck flat bottom flask, continuing the process like in example 1. Due to the use of an insoluble compound, the risk of Se⁺⁴ to be reduced to elemental selenium Se⁰, insoluble and without bioavailability, is very low. The lack of the apparition of the reddish color, specific to selenium Se⁰ during the complexation reaction represents a proof of non-forming elemental selenium.

It is obtained a product containing min. 0.1% selenium, the whole quantity of selenium being chelated on amino acids / peptides with -SH groups. The resulted product is useful as feed additive.

*Example 4.* Proceed like in example 1, with the difference that are used 27 g of rapeseed meal and the compound with low water solubility which is used is dicalcium hexaborate pentahidrate, 2CaO_{.3}B₂O₃.5H₂O. Boron react especially with the amino acids which contain hydroxyl groups, serine, threonine and tyrosine. The low soluble boron compound is formed in situ, in a 500 ml 3-neck flat bottom flask, on which are added 250 ml of de-ionized water, 2,3765 g of boric acid and 2,72 g of calcium hydroxide. The mixture is heated to 75°C, bubbled with CO2 for around 15 min, till are no longer forming a precipitate. Over the low solubility compound formed in situ are added 75 ml of amino acids concentrate.

It is obtained a product containing min. 20% boron chelate on amino acids / di/tripeptides. The product is useful as foliar fertilizer for plants.

*Example 5.* Proceed like in example 1, with the difference that are used 24 g of soya meal and the compound with low water solubility which is used is molybdenum oxide. It is added on the 500 ml 3-neck flat bottom flask 0,158 g of molybdenum oxide, over which is added the concentrate of proteic hydrolysate, which contain only free amino acids and di/tri-peptides.

It is obtained a product containing min. 1% molybdenum chelate on amino acids / di/tripeptides. The product is useful as feed additive or as foliar fertilizer for plants.

*Example 6.* Proceed like in example 1, with the difference that are used 24 g of soya meal and the compound with low water solubility which is used is[ZnCO₃]₂ · [Zn(OH)₂]₃, product with minimum 53% zinc. It is added on the 500 ml 3-neck flat bottom flask 2,95g of zinc carbonate basic, over which is added the concentrate of proteic hydrolysate, which contain only free amino acids and di/tripeptides.

It is obtained a product containing min. 15% zinc chelate on amino acids / di/tripeptides. The product is useful as feed additive or as foliar fertilizer for plants.

*Example 7*. Proceed like in example 1, with the difference that are used 11 g of whey protein concentrate, which are no longer washed for the remove of the bitter compounds, but it is treated directly with microbial lipase for the formation of superior flavor ingredients and then is hydrolyzed with microbial proteases. The concentrate of amino acids / peptides is added over 5,76 g of iron (III) oxide, Fe₂O₃.

It is obtained a product containing min. 30% iron chelate on amino acids / di/tripeptides. The product is useful as feed additive, food additive or as dietary supplement.

## Claims

1. Process for obtainment of amino acid chelates with essential micro-elements **characterized in that** include the following stages:
- washing of the proteinaceous material with a solution of 5% Na₂CO₃, followed by ultrasonication of mixture with 400 W for 20 min at 40°C, and hydrolysis with microbial lipase at a ratio of 20 Lipase Unit/g of proteic material
- Hydrolysis of proteinaceous material with a mixture of microbial proteases, endo-proteases and aminopeptidase, at a neutral pH and a temperature of 55...60°C, the enzymatic hydrolysis process being carried out for 16...20 hours, followed by ultrafiltration of the resulting hydrolysate through one or more membranes that filter out particles having a molecular weight greater than 3 kDa;
- Concentration by evaporation of the enzyme hydrolysate till 15% dry matter;
- Addition of an insoluble salt of essential micro-element, at a ratio 1 mole of insoluble compound of Mn, Zn, Fe, B to 2 moles of total amino acids, theoretical resulted by total hydrolysis of proteinaceous material, 15 mM insoluble compound of molybdenum to 1 mole of amino acids, 1,75 mM insoluble selenium compound to 1 mole of amino acids, 5 mM insoluble chromium compound to 2 moles of amino acids;
- Ultrasonication with 400 W of the mixture enzyme hydrolysate - insoluble micro element compound for 30 min at 45°C;
- Centrifugation of the excess insoluble compound of micro-element and spray-drying at 140..145°C entrance temperature and 80...85°C exit temperature.

2. Process according to claim 1 **characterized in that** the microbial lipase is selected from the enzyme from *Rhizomucor miehei* expressed in *Aspergillus oryzae.*

3. Process according to claim 1 **characterized in that** the proteinaceous material is selected from spent brewery yeast, rapeseed meal, soya meal, whey proteic concentrate.

4. Process according to claim 1 **characterized in that** the insoluble compound of the essential micro-element is selected from manganese (II) carbonate, chromium (III) carbonate, magnesium selenite hexahidrate, dicalcium hexaborate hexahidrate, molybdenum oxide, zinc carbonate basic, iron (III) oxide.

## Patentansprüche

1. Verfahren zur Herstellung von Aminosäure-Chelaten mit essentiellen Mikroelementen **dadurch gekennzeichnet, dass** es die folgenden Schritte umfasst:
- Waschen des proteinhaltigen Materials mit einer 5%-igen Na₂CO₃ Lösung, gefolgt durch Ultraschallbehandlung der Mischung mit 400 W für 20 Minuten bei 40°C und Hydrolyse mit mikrobiellen Lipase in einem Verhältnis von 20 Lipaseeinheiten/g von proteinhaltigen Material,
- Hydrolyse des proteinhaltigen Materials mit einem Gemisch aus mikrobiellen Proteasen, Endoproteasen und Aminopeptidase, bei einem neutralen pH-Wert und einer Temperatur von 55 ... 60°C, die enzymatische Hydrolyse wird für 16 ... 20 Stunden durchgeführt, gefolgt von Ultrafiltration des erhaltenen Hydrolysats durch eine oder mehrere Membranen die die Partikel mit einem Molekulargewicht größer als 3 kDa durch Filtration entfernen;
- Eindampfen des Enzym-Hydrolysats bis 15%-igen Trockensubstanz erhalten wird;
- Zugabe eines unlöslichen Salzes von essentiellem Mikroelement in einem Verhältnis von 1 Mol unlösliche Verbindung von Mn, Zn, Fe, B zu 2 Mol an Gesamtaminosäuren, theoretisch durch vollständige Hydrolyse von proteinhaltigen Materials erhalten, 15 mM unlöslicher Molybdänverbindung zu einem Mol Aminosäuren, 1,75 mM unlösliche Selen Verbindung zu einem Mol Aminosäuren, 5 mM unlösliche Chromverbindung zu 2 Mol Aminosäuren;
- Ultraschallbehandlung bei 400 W des Enzym-Hydrolysat - unlösliche Mikroelementverbindung Gemisches für 30 Minuten bei 45°C;
- Zentrifugieren der überschüssigen unlöslichen Mikroelementverbindung und Sprühtrocknen bei 140-145°C Eintrittstemperatur und 80-85°C Austrittstemperatur.

2. Verfahren nach Anspruch 1, **dadurch gekennzeichnet, dass** die mikrobielle Lipase aus dem Enzym aus *Rhizomucor miehei* das in *Aspergillus orizae* ausgedrückt ist ausgewählt wird.

3. Verfahren nach Anspruch 1, **dadurch gekennzeichnet, dass** das proteinhaltige Material aus verbrauchten Brauereihefe, Rapssaatmehl, Sojabohnenmehl, Molkeproteinkonzentrat ausgewählt wird.

4. Verfahren nach Anspruch 1, **dadurch gekennzeichnet, dass** die unlösliche Verbindung des essentiellen Mikroelements aus Mangan(II)carbonat, Chrom(III)-carbonat, Magnesium Selenit Hexahydrat, Dicalcium-Hexaborat- Hexahydrat, Molybdänoxid, basisches Zinkcarbonat, Eisen(III)-oxid ausgewählt wird.

## Revendications

1. Procédé pour l'obtention de chélates d'acides aminés avec des micro-éléments essentiels, **caractérisé en ce qu**'il comprend les étapes suivantes:
- Lavage de la matière protéique avec une solution de Na₂CO₃ à 5%, puis traitement du mélange avec des ultrasons à 400 W pendant 20 min à 40°C, et hydrolyse par de la lipase microbienne dans un rapport de 20 unités lipase/g de matière protéique
- Hydrolyse de la matière protéique avec un mélange de protéases microbiennes, d'endo-protéases et d'aminopeptidase, à un pH neutre et à une température de 55 ... 60°C, le procédé d'hydrolyse enzymatique étant effectué pendant 16 ... 20 heures, suivi par ultrafiltration de l'hydrolysat résultant à travers une ou plusieurs membranes qui filtrent les particules ayant un poids moléculaire supérieur à 3 kDa;
- Concentration par évaporation de l'hydrolysat enzymatique jusqu'à 15% de matière sèche;
- Ajout d'un sel insoluble de micro-élément essentiel, en un rapport de 1 mole du composé insoluble de Mn, Zn, Fe, B pour 2 moles d'acides aminés totaux, théoriquement obtenus par hydrolyse totale de la matière protéique, 15 mM de composé insoluble de molybdène pour 1 mole d'acides aminés, 1,75 mM de composé insoluble de sélénium pour 1 mole d'acides aminés, 5 mM de composé insoluble de chrome pour 2 moles d'acides aminés;
- Traitement du mélange de l'hydrolysat enzymatique avec le composé insoluble de micro-élément avec des ultrasons à 400 W pendant 30 minutes à 45°C;
- Centrifugation du composé insoluble de micro-élément en excès et séchage par pulvérisation à une température d'entrée de 140..145°C et une température de sortie de 80 ... 85°C.

2. Procédé selon la revendication 1, **caractérisé en ce que** la lipase microbienne est choisie parmi l'enzyme *Rhizomucor miehei* exprimée par *Aspergillus oryzae.*

3. Procédé selon la revendication 1, **caractérisé en ce que** la matière protéique est choisie parmi la levure de bière produite en brasserie, la farine de colza, la farine de soja, le concentré protéique de lactosérum.

4. Procédé selon la revendication 1, **caractérisé en ce que** le composé insoluble de micro-élément essentiel est choisi parmi le carbonate de manganèse (II), le carbonate de chrome (III), le sélénite de magnésium hexahydrate, le dicalcium hexaborate hexahydrate, l'oxyde de molybdène, le carbonate basique de zinc, l'oxyde de fer (III).
